# EUROPÄISCHE PATENTANMELDUNG

(11) **EP 1 102 146 A2**
(43) Veröffentlichungstag der Anmeldung: **23.05.2001**
(21) Anmeldenummer: 00203598.8
(22) Anmeldetag: 16.10.2000
(51) Int. Cl.: G05D 23/02

(54) **Ventil, insbesondere Thermostatventil für Heizungsanlagen**

(30) Priorität: 17.11.1999 DE 19955263
(71) Anmelder: Danfoss A/S, 6430 Nordborg (DK)
(72) Erfinder: Wiwe, Joergen Seindal, 8355 Solbjerg (DK); Hoelck, Poul, 8330 Beder (DK); Garm, Fester, 8600 Silkeborg (DK)

(57) **Zusammenfassung**

Ein Ventil, insbesondere Thermostatventil für Heizungsanlagen, weist ein Gehäuse (150), einen Ventilsitz (153), ein Verschlußstück (154) und eine Anschlußvorrichtung (166) zum Befestigen eines ersten Typs eines Betätigungsaufsatzes auf. Es gibt eine Anlagefläche (162) in einem ersten Abstand (A) vom freien Ende des Betätigungsstifts (156) und eine zugehörige erste Spannfläche. Zum Befestigen mindestens eines zweiten Typs eines Betätigungsaufsatzes ist am Gehäuse (150) in Kombination vorgesehen:
a) ein inneres Anschlußelement (158), das eine Dichtvorrichtung (157) und die erste Spannfläche (161) trägt und um eine vorbestimmte Strecke in Richtung der Stiftachse verlagerbar ist, und
b) ein äußeres Anschlußelement (163), das das innere Anschlußelement (158) umgibt, ein Außengewinde (165) und die Anlagefläche (162) trägt sowie um eine vorbestimmte Strecke in Richtung der Stiftachse entgegengesetzt zum inneren Anschlußelement verlagerbar ist.

Auf diese Weise ist es möglich, ein Ventil zu schaffen, das in der Lage ist, wahlweise eines von mindestens zwei Betätigungsaufsätzen zu tragen, ohne daß Zusatzteile verlorengehen könnten.

## Beschreibung

Die Erfindung bezieht sich auf ein Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist.

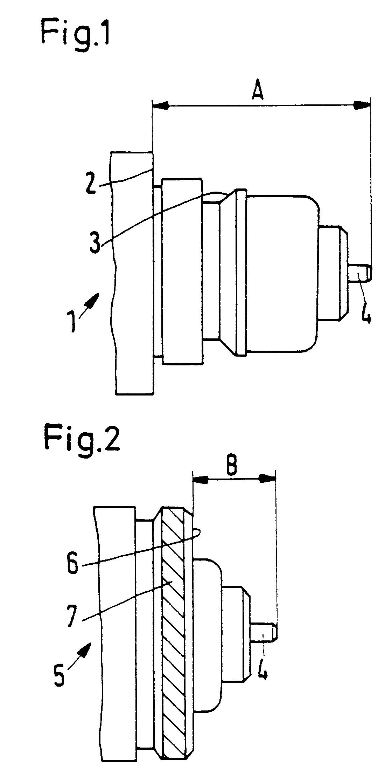

Damit am Ventil ein Betätigungsaufsatz angebracht werden kann, ist am Ventilgehäuses eine Anschlußvorrichtung erforderlich, die dem Typ des Betätigungsaufsatzes entspricht. Die meisten auf dem Markt befindlichen Ventile haben Anschlußvorrichtungen, wie sie in den Fig. 1 und 2 veranschaulicht sind. Bei der eine erste Form aufweisende Anschlußvorrichtung 1 ist eine Anlagefläche 2 vorgesehen, gegen die der Sockel des Betätigungsaufsatzes angepreßt wird, indem eine radiale Kraft an einer konusförmigen Spannfläche 3 in die Axialrichtung umgelenkt wird. Der Abstand A zwischen der Anlagefläche 2 und dem freien Ende des der Betätigung des Verschlußstücks dienenden Stiftes 4 beträgt etwa 30 mm. Ein Beispiel hierfür ist in der DE 32 36 372 C2 veranschaulicht. Bei der eine zweite Form aufweisenden Anschlußvorrichtung 5 ist die Anlagefläche 6 an der Stirnseite einer als Gewinde ausgeführten Spannfläche 7 vorgesehen. Durch Aufschrauben einer mit einem Innenflansch versehenen Überwurfmutter wird der Sockel des Betätigungsaufsatzes gegen die Anlagefläche 6 gedrückt. Die Spannfläche 7 besitzt ein M30 x 1,5 Gewinde. Der Abstand B zwischen der Anlagefläche 6 und dem freien Ende des Ventilstiftes 4 beträgt etwa 10 mm. Ein Beispiel hierfür ist in DE 43 44 773 A1 veranschaulicht. Weitere Anschlußvorrichtungen unterscheiden sich von der Anschlußvorrichtung 5 dadurch, daß der Abstand B etwas größer ist, beispielsweise etwa 20 mm beträgt.

Es ist ferner bekannt (DE 94 11 056 U1), ein und dasselbe Ventil zum Anschluß von zwei oder mehr Typen eines Betätigungsaufsatzes geeignet zu machen, indem ein Adapter, also ein Zusatzbauteil, zwischen Ventil und Betätigungsaufsatz geschaltet wird. Der Heizungsbauer kann daher bei Reparaturarbeiten mit wenigen Ersatzteilen, die er mitführen muß, auskommen. Er kann auch Ventile und Betätigungsaufsätze unterschiedlicher Firmen miteinander kombinieren. Allerdings hat es sich gezeigt, daß die bei einer bestimmten Nutzungsart nicht benötigten Zusatzbauteile oder Adapter zu dem Zeitpunkt, an dem sie benötigt werden, häufig nicht zur Verfügung stehen, sei es daß sie verlorengegangen oder aufgebraucht sind.

Der Erfindung liegt demgegenüber die Aufgabe zugrunde, ein Ventil der eingangs beschriebenen Art anzugeben, das alle Mittel aufweist, um wahlweise einen von mindestens zwei unterschiedlichen Betätigungsaufsatz-Typen anzubringen.

Diese Aufgabe wird erfindungsgemäß dadurch gelöst, daß zum Befestigen mindestens eines zweiten Typs eines Betätigungsaufsatzes in Kombination vorgesehen sind:
a) ein inneres Anschlußelement, das die Dichtvorrichtung und die erste Spannfläche trägt und um eine vorbestimmte Strecke in Richtung der Stiftachse verlagerbar ist, und
b) ein äußeres Anschlußelement, das das innere Anschlußelement umgibt, ein Außengewinde und die Anlagefläche trägt sowie um eine vorbestimmte Strecke in Richtung der Stiftachse entgegengesetzt zum inneren Anschlußelement verlagerbar ist.

Durch die Einführung axial verschiebbarer Teile gelingt es, mindestens zwei unterschiedliche Formen zu schaffen, die wahlweise für das Anbringen eines ersten oder zweiten Typs eines Betätigungsaufsatzes geeignet sind. Durch die beanspruchte Kombination ist es möglich, einen verhältnismäßig kleinen zweiten Abstand zwischen der Anlagefläche und dem freien Ende des Stiftes zu erzielen, ohne das innere Anschlußelement zu weit einwärts und das äußere Anschlußelement zu weit auswärts verlagern zu müssen. Man kann das Ventil deshalb als Einbauventil im Rahmen der dafür üblichen Abmessungen einsetzen. Die für beide Fälle vorgesehene Anlagefläche, welche die Lage des Sockels des Betätigungsaufsatzes bestimmt, kann mit einer Abdeckung fluchten oder nur um einige Millimeter von dieser Abdeckung abweichen.

Von Vorteil ist es, daß die erste Spannfläche eine Konusfläche ist. Auf diese Weise läßt sich der größte Teil der auf dem Markt befindlichen Betätigungsaufsätze auf dem Ventil montierten.

Günstig ist es, daß das innere Anschlußelement einen axialen Fortsatz aufweist, der dem Eingriff in einen Stutzen eines Heizkörpers dient. Beim Einwärts-Verlagern des inneren Anschlußelements wird der Fortsatz im Stutzen verschoben.

Empfehlenswert ist es, daß das äußere Anschlußelement eine Hülse ist, die teilweise zwischen dem inneren Anschlußelement und einer Gehäusewand angeordnet ist. Bei dieser Konstruktion kann das äußere Anschlußelement an der Innenwand des Gehäuses geführt werden.

Eine ebenfalls vorteilhafte Alternative besteht darin, daß das äußere Anschlußelement ein Ring ist, der mit einem Innengewinde auf einem am Gehäuse angebrachten äußeren Stellgewinde verstellbar ist. Dies ergibt eine sehr einfache Konstruktion.

In weiterer Ausgestaltung der Erfindung ist dafür gesorgt, daß das Gehäuse Profilierungen zur Drehsicherung des Betätigungsaufsatzes aufweist, die sowohl dem ersten als auch dem zweiten Typ des Betätigungsaufsatzes angepaßt sind. Auch die Profilierungen sind daher den unterschiedlichen Typen der Betätigungsaufsätze zugeordnet.

Besonders empfehlenswert ist es, daß bei den Drehsicherungsprofilierungen eine Anzahl von achsparallelen, nach außen offenen Rillen und stirnseitig ein Außensechskant kombiniert sind. Damit sind die beiden häufigsten Drehsicherungs-Profilierungen vorgesehen.

Günstig ist es ferner, daß das äußere Stellgewinde auf den zwischen den Rillen verbleibenden Wandabschnitten des Gehäuses ausgebildet ist. Die die Profilierungen tragenden Wandabschnitte des Gehäuses übernehmen daher eine weitere Aufgabe.

Die Erfindung wird im folgenden anhand eines bevorzugten Ausführungsbeispiels in Verbindung mit der Zeichnung näher beschrieben. Hierin zeigen:
- Fig. 1: eine schematische Darstellung einer Anschlußvorrichtung für einen ersten Typ eines Betätigungsaufsatzes nach dem Stand der Technik,
- Fig. 2: eine schematische Darstellung einer Anschlußvorrichtung für einen zweiten Typ eines Betätigungsaufsatzes gemäß dem Stand der Technik,
- Fig. 3: einen Längsschnitt durch ein Ventil gemäß der Erfindung mit einer Anschlußvorrichtung entsprechend Fig. 1,
- Fig. 4: einen Längsschnitt durch das Ventil gemäß Fig. 3 mit einer Anschlußvorrichtung entsprechend Fig. 2,
- Fig. 5: einen Längsschnitt durch eine weitere Ausführungsform eines erfindungsgemäßen Ventils, wobei in der oberen Hälfte die eine und in der unteren Hälfte die andere Form einer Anschlußvorrichtung gezeigt ist,
- Fig. 6: einen Teilschnitt längs der Linie X-X der Fig. 7 und
- Fig. 7: eine Draufsicht auf das Gehäuse gemäß Fig. 6.

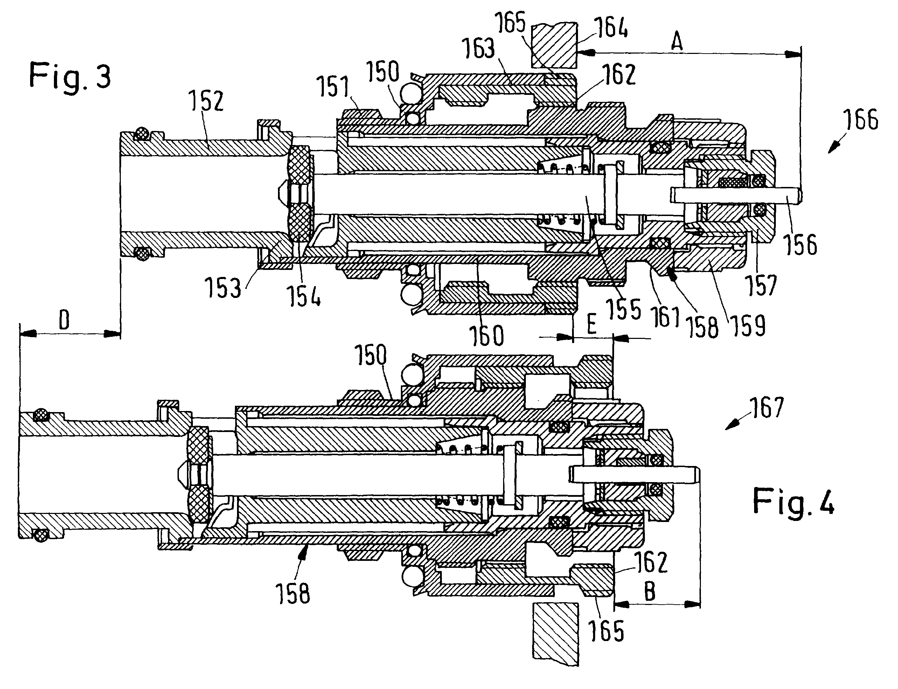

Bei der Ausführungsform nach den Fig. 3 und 4 trägt ein Einbaugehäuse 150 ein Außengewinde 151, mit dem das Ventil in einen Heizkörper eingeschraubt werden kann. Das Gehäuse 150 ist mit einem Fortsatz 152 versehen, der in einen Stutzen eines Heizkörpers eingreifen kann. Das Gehäuse 150 ist mit einem Ventilsitz 153 versehen, der mit einem Verschlußstück 154 zusammenwirkt. Das Verschlußstück 154 ist über einen Ventilschaft 155 mit einem Stift 156 gekuppelt, der durch eine Dichtvorrichtung 157 nach außen geführt ist und dort von einen Betätigungsaufsatz verstellt werden kann.

Das Ventil besitzt ein inneres Anschlußelement 158, das die Dichtvorrichtung 157, einen Verstellring 159 zum Verstellen einer Voreinstellvorrichtung 160 für den kᵥ-Wert und eine Konusfläche 161 aufweist. Diese wirkt als Spannfläche mit einer Anlagefläche 162 zusammen, die an der Stirnseite eines äußeren Anschlußelements 163 ausgebildet ist und mit einer Abdeckung 164 fluchtet. Das äußere Anschlußelement 163 hat die Form einer Hülse und trägt am vorderen Ende ein Außengewinde 165 mit den Abmessungen M30 x 1,5.

Auf diese Weise ergibt sich eine erste Anschlußvorrichtung 166, die der Form der Fig. 1 entspricht. Durch nachstehende Schritte kommt man zu einer Anschlußvorrichtung 167, die der Form der Fig. 2 entspricht. Hier ist der Abstand B zwischen der Anlagefläche 162 und dem freien Ende des Stiftes 156 gleich etwa 10 mm. Zu diesem Zweck wird das innere Anschlußelement 158 um den Betrag D einwärts in das Gehäuse 150 verlagert. Außerdem wird das äußere Anschlußelement 163 auswärts aus dem Gehäuse um den Betrag E verlagert. Um den genauen Wert von E einstellen zu können, sind Markierungen o.dgl. am äußeren Anschlußelement 163 und am Gehäuse 150 vorgesehen. In Fig. 3 ist die Anlagefläche 162 in gleicher Höhe wie die Oberfläche der Abdeckplatte 164 angeordnet, in Fig. 4 hat sie einen Abstand von etwa 5 mm hiervon. Der Sockel eines aufgespannten Betätigungsaufsatzes endet daher in Höhe der Abdeckplatte 164 oder kurz darüber, was optisch kaum auffällt. Das äußere Anschlußelement 163 kann im Gehäuse 150 verschraubbar oder, gegebenenfalls nach einer Winkeldrehung aus einer Sperrstellung, verschiebbar sein.

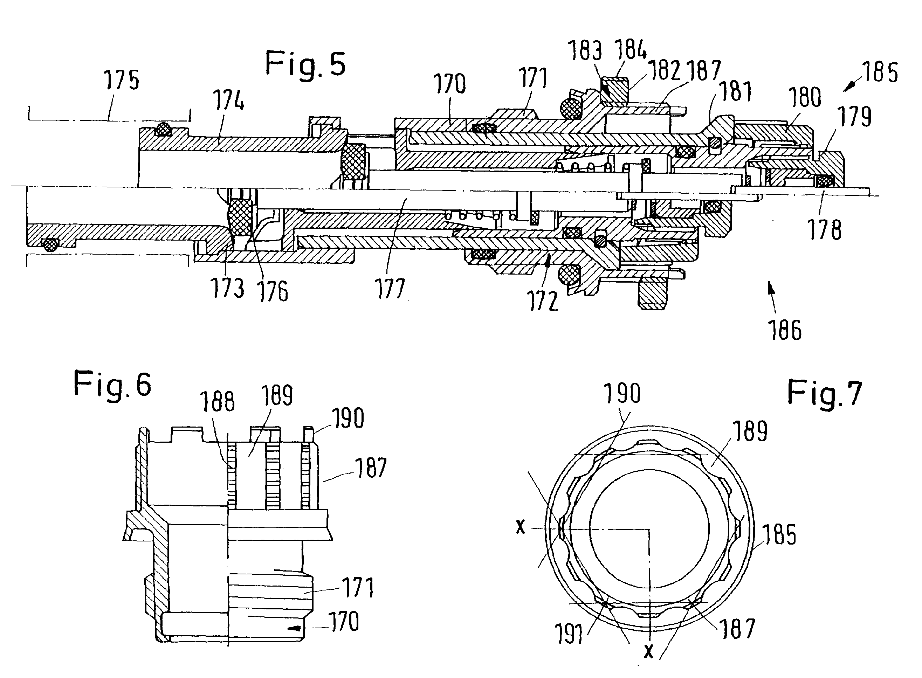

Ein weiteres Ausführungsbeispiel zeigen die Fig. 5 bis 7. Wiederum gibt es ein Einbaugehäuse 170 mit einem Außengewinde 171. Ein inneres Anschlußelement 172 trägt einen Ventilsitz 173 und einen Fortsatz 174, der in einer gestrichelt angedeuteten Bohrung 175 eines Stutzens eines Heizkörpers verschiebbar ist. Ein Verschlußstück 176 ist über einen Ventilschaft 177 mit einem Stift 178 gekuppelt, der durch eine Dichtvorrichtung 179 nach außen geführt ist. Ferner gibt es ein Handrad 180, das zur Verdrehung einer Einstellvorrichtung für den kᵥ-Wert dient. Zum inneren Anschlußelement 172 gehört auch eine Konusfläche 181, die mit einer Anlagefläche 182 zusammenwirkt. Letztere ist Teil eines äußeren Anschlußelements 183, das ein Außengewinde 184 trägt. Somit ergibt sich eine Anschlußvorrichtung 185, die durch Einwärts-Verlagern des inneren Anschlußelements 172 und Auswärts-Verlagern des äußeren Anschlußelements 183 die Form der Fig. 2 einnimmt und somit zur Anschlußvorrichtung 186 wird.

Das Gehäuse 170 besitzt eine nach außen ragende Ringwand 187. Deren Innendurchmesser ist so bemessen, daß das innere Anschlußelement 172 ungehindert um einen vorbestimmten Abstand einwärts geschoben werden kann. An der Außenseite ist ein äußeres Stellgewinde 188 vorgesehen. Es ist durch erste Profilierungen 189 in der Form von nach außen offenen Längsrillen unterbrochen. Am freien Ende ist die Wand 187 mit einer zweiten Profilierung 190 in der Form eines Außensechskants versehen, derart, daß die Wand 187 teilweise völlig unterbrochen ist. In Fig. 7 sind die Begrenzungsflächen des Außensechskants 190 zwecks Deutlichmachung in Verlängerung dargestellt. Die Schnittpunkte ergeben die Ecken 191.

Die erste Profilierung dient zur Drehsicherung bei Betätigungsaufsätzen mit Schnappverschluß, die an der Innenseite den Rillen 189 entsprechende Vorsprünge aufweisen. Die zweite Profilierung dient der Drehsicherung von Betätigungsaufsätzen, die mit einer Überwurfmutter befestigt werden und einen Innensechskant aufweisen.

## Patentansprüche

1. Ventil, insbesondere Thermostatventil für Heizungsanlagen, mit einem Gehäuse, einem Ventilsitz, einem Verschlußstück, das mittels eines durch eine Dichtvorrichtung nach außen geführten Stifts zu betätigen ist, und mit einer Anschlußvorrichtung zum Befestigen eines Betätigungsaufsatzes, die eine Anlagefläche in einem ersten Abstand vom freien Ende des Stifts und eine zugehörige erste Spannfläche aufweist, dadurch gekennzeichnet, daß zum Befestigen mindestens eines zweiten Typs eines Betätigungsaufsatzes in Kombination vorgesehen sind:
a) ein inneres Anschlußelement (158; 172), das die Dichtvorrichtung (157; 179) und die erste Spannfläche (161; 181) trägt und um eine vorbestimmte Strecke (D) in Richtung der Stiftachse verlagerbar ist, und
b) ein äußeres Anschlußelement (163; 183), das das innere Anschlußelement umgibt, ein Außengewinde (165; 184) und die Anlagefläche (162; 182) trägt sowie um eine vorbestimmte Strecke (E) in Richtung der Stiftachse entgegengesetzt zum inneren Anschlußelement verlagerbar ist.

2. Ventil nach Anspruch 1, dadurch gekennzeichnet, daß die erste Spannfläche eine Konusfläche (161; 181) ist.

3. Ventil nach Anspruch 1 oder 2, dadurch gekennzeichnet, daß das innere Anschlußelement (158; 172) einen axialen Fortsatz (152; 174) aufweist, der dem Eingriff in einen Stutzen (175) eines Heizkörpers dient.

4. Ventil nach einem der Ansprüche 1 bis 3, dadurch gekennzeichnet, daß das äußere Anschlußelement (163) eine Hülse ist, die teilweise zwischen dem inneren Anschlußelement (158) und einer Gehäusewand angeordnet ist.

5. Ventil nach einem der Ansprüche 1 bis 3, dadurch gekennzeichnet, daß das äußere Anschlußelement (172) ein Ring ist, der mit einem Innengewinde auf einem am Gehäuse (170) angebrachten äußeren Stellgewinde (188) verstellbar ist.

6. Ventil nach einem der Ansprüche 1 bis 5, dadurch gekennzeichnet, daß das Gehäuse (170) Profilierungen zur Drehsicherung des Betätigungsaufsatzes aufweist, die sowohl dem ersten als auch dem zweiten Typ des Betätigungsaufsatzes angepaßt sind.

7. Ventil nach Anspruch 5 und 6, dadurch gekennzeichnet, daß bei den Drehsicherungsprofilierungen eine Anzahl von achsparallelen, nach außen offenen Rillen (189) und stirnseitig ein Außensechskant (190) kombiniert sind.

8. Ventil nach Anspruch 3 und 6, dadurch gekennzeichnet, daß das äußere Stellgewinde (188) auf den zwischen den Rillen (189) verbleibenden Wandabschnitten des Gehäuses (170) ausgebildet ist.
